# EUROPÄISCHE PATENTSCHRIFT

(11) **EP 1 386 691 B1**
(45) Veröffentlichungstag und Bekanntmachung des Hinweises auf die Patenterteilung: **28.12.2005**
(21) Anmeldenummer: 03017220.9
(22) Anmeldetag: 29.07.2003
(51) Int. Cl.: B23Q 1/62, B23Q 1/48, B23Q 1/01, B23Q 39/02

(54) **Werkzeugmaschine zum Bearbeiten von Futterteilen**
Machine tool for machining fixtures
Machine-outil pour l'usinage de porte-pièces

(30) Priorität: 30.07.2002 DE 20211744 U
(43) Veröffentlichungstag der Anmeldung: 04.02.2004
(73) Patentinhaber: ILG GmbH, 70736 Fellbach (DE)
(72) Erfinder: Ilg, Herbert, 71554 Weissach i. T. (DE)
(74) Vertreter: Manitz, Finsterwald & Partner GbR

(56) Entgegenhaltungen:
- EP-A- 0 568 798
- DE-A- 19 904 859
- DE-C- 4 422 416

## Beschreibung

Die vorliegende Erfindung betrifft eine Werkzeugmaschine zum Bearbeiten von als so genannte Futterteile ausgebildeten Werkstücken nach dem Oberbegriff von Anspruch 1.

Eine derartige Werkzeugmaschine ist aus der EP-A-0 568 798 bekannt. Sie hat den Vorteil, dass das Be- und Entladen der Werkzeugmaschine über die Spindeleinheit erfolgen kann. Separate Be- und Entladeeinrichtungen, wie beispielsweise Portallader, können dadurch eingespart werden. Damit können nicht nur die Herstellungskosten gesenkt sondern auch der Platzbedarf reduziert werden.

Durch die Anordnung der Bearbeitungsstation an der Vorderseite der Maschine und der Werkzeugaufnahme- und/oder der Ablagestation dahinter wird ein sehr platzsparender Aufbau der Werkzeugmaschine ermöglicht. Insbesondere muss die Spindeleinheit nicht, wie bei anderen bekannten Werkzeugmaschinen seitlich über den eigentlichen Maschinenaufbau hinaus verfahren, um Werkstücke aufzunehmen oder abzulegen. Stattdessen kann dies innerhalb des Maschinenaufbaus erfolgen, wodurch sich der erforderliche Verfahrweg verkürzt und damit auch die Be- und Entladezeit verringert. Zudem ermöglicht diese Anordnung einen platzsparenden Aufbau der Werkzeugmaschine.

Die DE-A-199 04 859 offenbart eine Werkzeugmaschine mit zwei Werkzeughaltern, die jeweils ortsfest angeordnet sind. Jedem Werkzeughalter ist eine eigene Werkstückspindeleinheit zugeordnet, so dass insgesamt zwei Bearbeitungsstationen vorhanden sind.

Der vorliegenden Erfindung liegt die Aufgabe zugrunde, eine Werkzeugmaschine der eingangs genannten Art weiter zu verbessern. Insbesondere soll die Einsatzmöglichkeit der Maschine erweitert werden.

Diese Aufgabe wird durch die Merkmale von Anspruch 1 gelöst.

Durch das Vorsehen von zwei Bearbeitungswerkzeugen, die jeweils längs einer Bearbeitungsachse verfahrbar ausgebildet sind, kann eine sehr vielseitige Bearbeitung eines Werkstückes in einer Aufspannung durchgeführt werden. Durch die Anordnung der Bearbeitungsstation zwischen den beiden Bearbeitungswerkzeugen ergibt sich ein sehr vorteilhafter, insbesondere Platz sparender Aufbau.

Ein besonders geeigneter Aufbau ergibt sich, wenn die Spindeleinheit auf einer von einem Maschinenständer getragenen Kreuzschlittenanordnung mit einem vertikal verfahrbaren, die Spindeleinheit tragenden ersten Schlitten und einem horizontal und senkrecht zur Ebene des ersten Schlittens verfahrbaren und diesen tragenden zweiten Schlitten angeordnet ist, der seinerseits auf dem Ständer angeordnet ist. Über die Kreuzschlittenanordnung können die Verfahrbewegungen der Spindeleinheit in vorteilhafter Weise realisiert werden. Die Ständeranordnung ermöglicht dabei einen platzsparenden Aufbau.

Der Maschinenständer ist bevorzugt als Doppelständer mit zwei zueinander parallelen, zur Vorderseite der Maschine senkrechten und zwischen sich einen Freiraum für die Spindeleinheit und das von dieser gehaltene Werkstück lassenden, vertikalen Schenkeln ausgebildet. Eine derartige Doppelständeranordnung stellt einerseits eine hohe Stabilität der Werkzeugmaschine sicher und ermöglicht andererseits ein platzsparendes Verfahren der Spindeleinheit zwischen Bearbeitungsstation und Werkstückaufnahme- und/oder -ablagestation.

Nach einer weiteren Ausgestaltung der Erfindung ist der Maschinenständer mit einem parallel zur Vorderseite der Maschine verlaufenden Durchbruch, insbesondere einem Tunnel, versehen, durch welchen eine Transporteinrichtung für die Werkstücke, insbesondere ein Transportband hindurchführbar ist und in dessen Bereich die Werkstückaufnahme- und/oder -ablagestation vorgesehen ist. Die Aufnahme- und/oder Ablagestation kann dadurch in das Innere der Werkzeugmaschine integriert werden. Der Platzbedarf ist dadurch weiter reduziert. Besonders bevorzugt ist es dabei, wenn die Werkstücke durch den Durchbruch hindurch taktbar sind. Damit kann eine getaktete Bearbeitung verwirklicht werden.

Besonders bevorzugt ist es außerdem, wenn beide Bewegungsachsen der Spindeleinheit zugleich als Bearbeitungsachsen ausgebildet sind. Die Beweglichkeit der Spindeleinheit kann dadurch nicht nur zum Be- und Entladen der Werkzeugmaschine, sondern auch bei der Bearbeitung ausgenutzt werden, indem die erforderlichen Zustellbewegungen von der Spindeleinheit ausgeführt werden.

Durch Ausbildung der beiden Bewegungsachsen der Spindeleinheit als Bearbeitungsachsen kann zusammen mit der verfahrbaren Ausbildung der beiden Bearbeitungswerkzeuge jeweils eine Dreiachsenbearbeitung realisiert werden, und zwar in besonders vorteilhafter und kompakter Weise. Hierzu verlaufen die Bearbeitungsachsen der Bearbeitungswerkzeuge insbesondere senkrecht zu den beiden Bewegungsachsen der Spindeleinheit, so dass sich Bearbeitungsachsen X₁, X₂, Y und Z realisieren lassen.

Nach einer speziellen Ausgestaltung der Erfindung ist ein Werkzeugrevolver, nach einer anderen speziellen Ausgestaltung sind zwei Werkzeugrevolver vorgesehen. In beiden Fällen sind die Werkzeugrevolver bevorzugt als Scheibenrevolver ausgebildet.

Nach einer weiteren speziellen Ausgestaltung ist ein Werkzeugrevolver mit einer Innenschleifeinrichtung, in noch einer speziellen Ausgestaltung ein Revolver mit einer Außenschleifeinrichtung kombiniert. Auch diese beiden Varianten sind in bestimmten Anwendungsfällen vorteilhaft.

Die Drehachse eines oder beider Revolver verläuft in allen genannten Fällen bevorzugt parallel zur Bearbeitungsachse. Damit lässt sich eine vorteilhafte Anordnung der Werkzeuge relativ zu einem in der Bearbeitungsstation vorhandenen Werkstück realisieren.

Nach noch einer speziellen Ausgestaltung ist ein Linearwerkzeughalter vorgesehen. Damit lässt sich für weitere Anwendungsfälle eine vorteilhafte Werkzeugmaschine realisieren.

Ausführungsbeispiele der Erfindung sind in der Zeichnung dargestellt und werden nachfolgend beschrieben. Es zeigen, jeweils in schematischer Darstellung,
- Fig. 1: eine perspektivische Ansicht einer ersten Variante der erfindungsgemäßen Werkzeugmaschine,
- Fig. 2: eine Draufsicht auf die Vorderseite der Werkzeugmaschine von Fig. 1,
- Fig. 3: eine Draufsicht auf eine Seite der Werkzeugmaschine von Fig. 1,
- Fig. 4: eine Draufsicht auf die Oberseite der Werkzeugmaschine von Fig. 1,
- Fig. 5: eine perspektivische Ansicht einer zweiten Variante der erfindungsgemäßen Werkzeugmaschine, und
- Fig. 6: eine perspektivische Ansicht einer dritten Variante der erfindungsgemäßen Werkzeugmaschine.

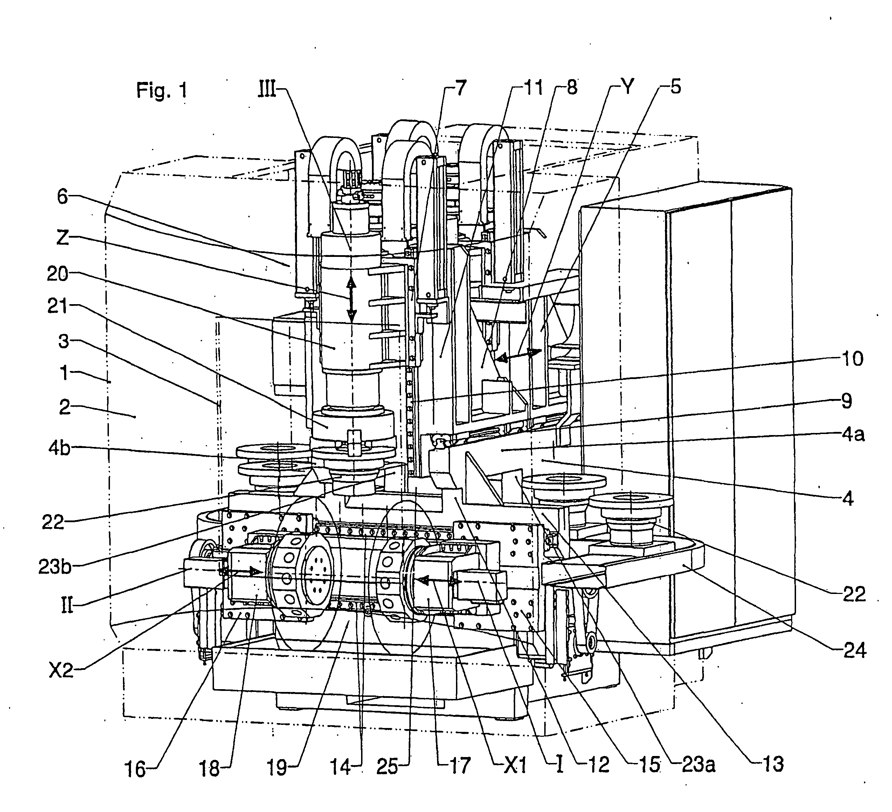

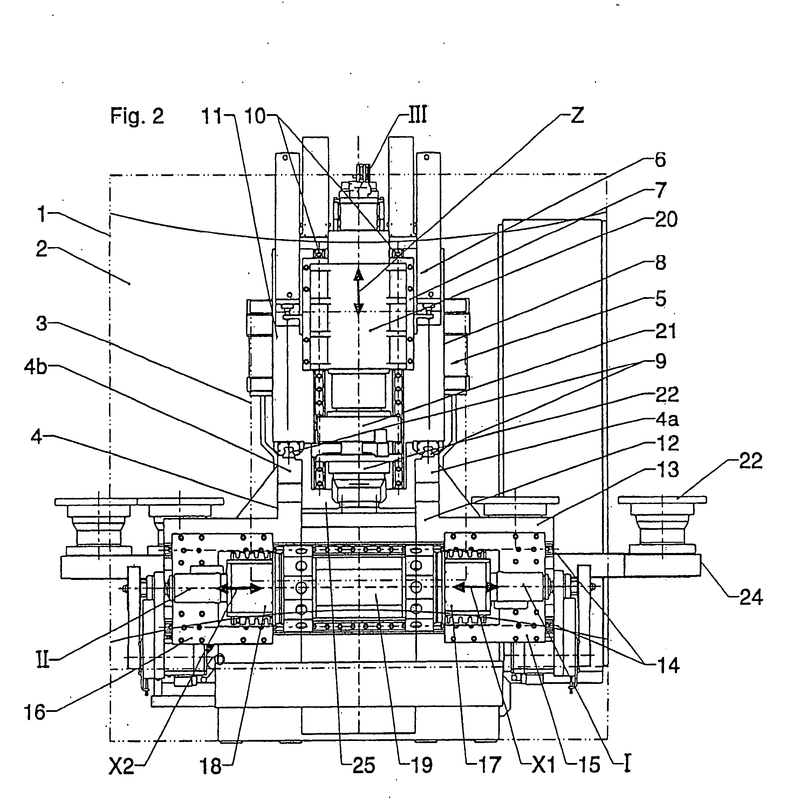

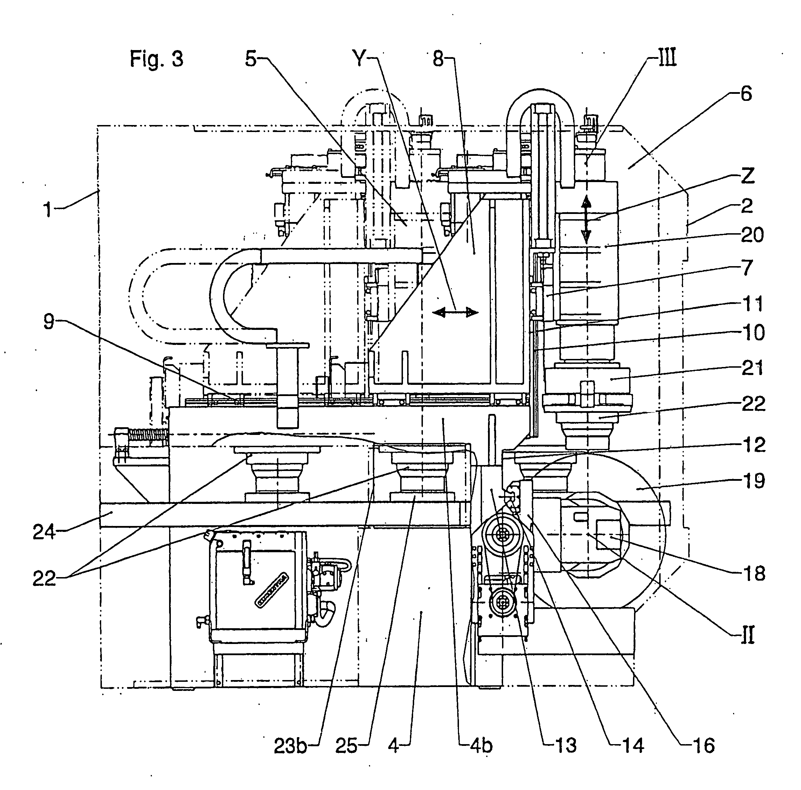

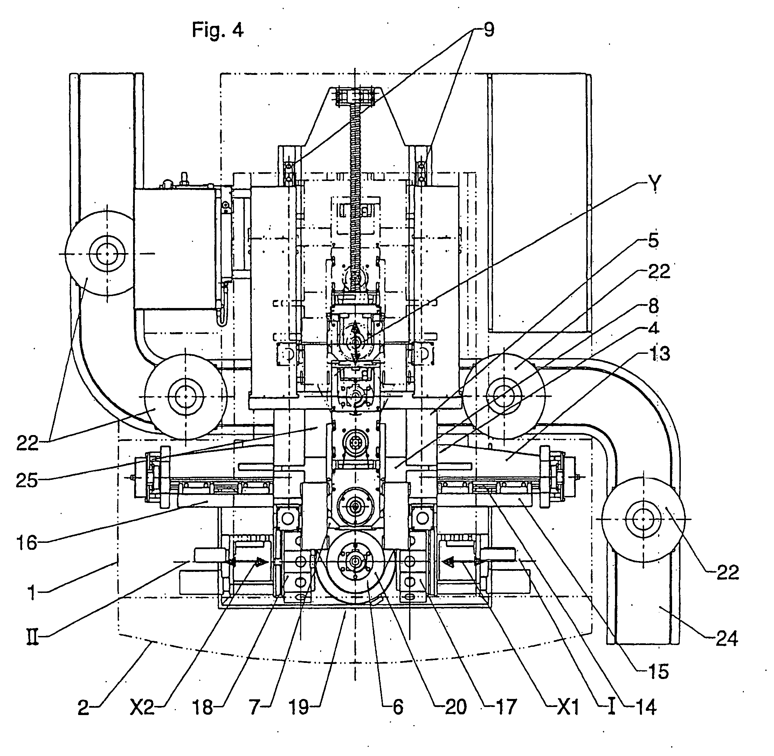

Die in den Fig. 1 bis 4 dargestellte Werkzeugmaschine umfasst eine strichpunktiert angedeutete Einhausung 1 zur Aufnahme der wesentlichen Teile der Werkzeugmaschine, die auf einer Seite 2, der Vorderseite der Werkzeugmaschine, einen Zugang 3 für eine Bedienperson aufweist.

In der Einhausung 1 ist ein als Doppelständeranordnung ausgebildeter Maschinenständer 4 mit senkrecht zur Vorderseite 2 der Maschine verlaufenden, vertikalen Schenkeln 4a, 4b angeordnet, auf welchem eine Kreuzschlittenanordnung 5 abgestützt ist, die auf ihrer Vorderseite eine Spindeleinheit 6 trägt. Die Kreuzschlittenanordnung 5 besteht aus einem vertikal verfahrbaren, die Spindeleinheit 6 tragenden ersten Schlitten 7 und einem horizontal und senkrecht zur Ebene des ersten Schlittens 7 verfahrbaren und diesen tragenden zweiten Schlitten 8, so genannter Fahrständerschlitten, der seinerseits auf der Oberseite des Maschinenständers 4 angeordnet und längs dort vorhandener, senkrecht zur Vorderseite 2 der Einhausung 1 verlaufender Schienen 9 verfahrbar ist. Der erste, die Spindeleinheit 6 tragende Schlitten 7 ist längs vertikaler Schienen 10 verfahrbar, die an der Vorderseite 11 des zweiten Schlittens 8 vorgesehen sind.

An der Vorderseite 12 des Maschinenständers 4 ist eine zur Vorderseite 2 der Einhausung 1 parallele Trägerplatte 13 angeordnet, auf welcher ebenfalls zur Vorderseite 2 der Einhausung 1 parallele, horizontale Schienen 14 verlaufen. Auf den Schienen 14 sind zwei weitere Schlitten 15 und 16 verfahrbar, die jeweils einen scheibenförmigen Werkzeugrevolver 17, 18 tragen. Die Revolverdrehachsen I und II verlaufen jeweils parallel zu den Bewegungsachsen X₁ und X₂ der beiden Werkzeugschlitten 15, 16. Die Bewegungsachsen X₁ und X₂ der beiden Werkzeugschlitten 15, 16 sind als Bearbeitungsachsen der Werkzeugmaschine ausgebildet.

Zwischen den beiden Werkzeugrevolvern 17, 18 ist die Bearbeitungsstation 19 der Werkzeugmaschine zur Bearbeitung eines von der Spindeleinheit 6 gehaltenen Werkstücks 22, insbesondere Futterteils ausgebildet. Die Spindeleinheit 6 weist hierfür eine Werkstückspindel 20 mit vertikaler Drehachse III und Spannfutter 21 auf. Die Spindelachse III verläuft somit parallel zu einer Bewegungsachse Z der Spindeleinheit 6, die ebenfalls als Bearbeitungsachse ausgebildet ist. Auch die andere, horizontal und senkrecht zur Vorderseite 2 der Einhausung 1 verlaufende Bewegungsachse Y der Spindeleinheit 6 ist als Bearbeitungsachse ausgebildet.

Hinter der Trägerplatte 13 weist der Maschinenständer 4 in seinen beiden Schenkeln 4a, 4b jeweils einen Durchbruch 23a, 23b auf, durch welche ein Transportband 24 für die Werkstücke 22 hindurchgeführt ist. Zwischen den beiden Durchbrüchen 23a und 23b ist die Werkstückaufnahme- und -ablagestation 25 der Werkzeugmaschine ausgebildet. Zwischen dieser Station 25 und der Bearbeitungsstation 19 ist die Spindeleinheit 6 verfahrbar, so dass die Spindeleinheit 6 Werkstücke 22 zwischen der Aufnahme- und Ablagestation 25 und der Bearbeitungsstation 19 hin und her transportieren kann.

Im Betrieb verfährt die Spindeleinheit 6 zu der Werkstückaufnahme- und -ablagestation 25 und nimmt dort ein zu bearbeitendes Werkstück 22 auf, indem die Spindeleinheit 6 längs ihrer Bewegungsachse Z nach unten verfährt und das zu bearbeitende Werkstück 22 mit dem Spannfutter 21 aufnimmt. Danach verfährt die Spindeleinheit 6 mit dem zu bearbeitenden Werkstück 22 in die Bearbeitungsstation 19, indem sie zunächst längs ihrer Bewegungsachse Z nach oben, anschließend längs ihrer Bewegungsachse Y nach vorne und anschließend wieder längs ihrer Bewegungsachse Z nach unten verfährt. Längs der Bewegungsachsen X₁ und X₂ wird der eine Werkzeugrevolver 17 oder der andere Werkzeugrevolver 18 zur Bearbeitung des Werkstücks 22 zugestellt. Weitere Zustellbewegungen werden über die als Bearbeitungsachsen ausgebildeten Bewegungsachsen Y und Z der Spindeleinheit 6 realisiert.

Nach abgeschlossener Bearbeitung des Werkstücks 22 werden die Werkzeugrevolver 17, 18 zurückgefahren, und das bearbeitete Werkstück 22 über die Spindeleinheit 6 von der Bearbeitungsstation 19 in die Werkstückaufnahme- und -ablagestation 25 transportiert. Hierfür verfährt die Spindeleinheit 6 zunächst wieder längs ihrer Bewegungsachse Z nach oben, anschließend längs ihrer Bewegungsachse Y nach hinten und dann wieder längs ihrer Bewegungsachse Z nach unten. Nach Ablegen des bearbeiteten Werkstücks 22 wird das Transportband 24 für die Werkstücke 22 weiter getaktet, so dass sich das nächste zu bearbeitende Werkstück 22 in der Werkstückaufnahme- und -ablagestation 25 befindet. Nun wird dieses in derselben Weise wie zuvor beschrieben von der Spindeleinheit 6 aufgenommen und in die Bearbeitungsstation 19 transportiert, wo es dann wieder bearbeitet wird und so fort.

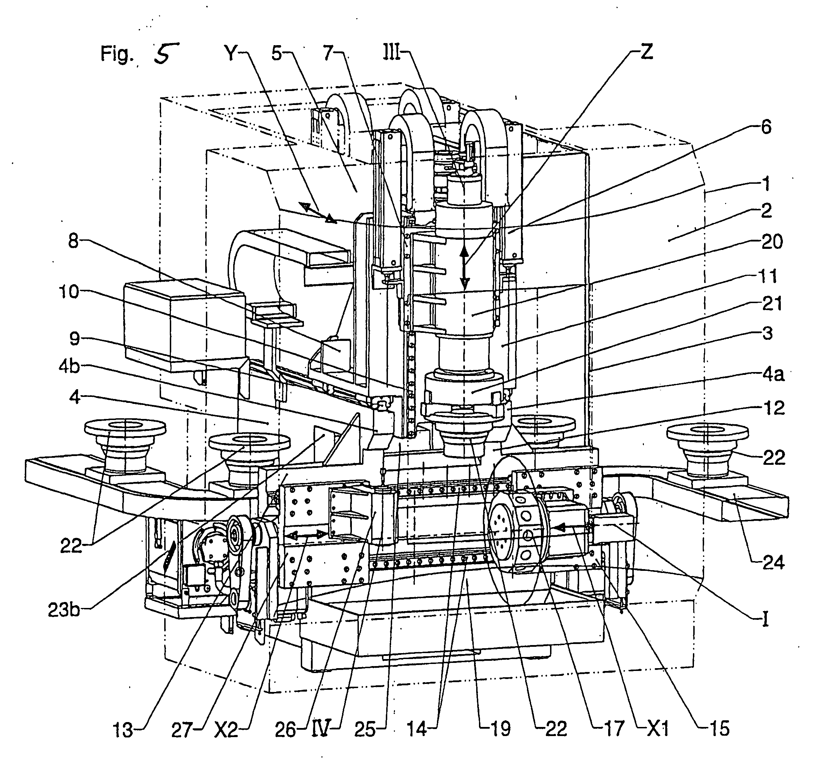

Bei der in Fig. 5 dargestellten zweitenVariante einer erfindungsgemäßen Werkzeugmaschine ist an der Trägerplatte 13 anstelle des einen Werkzeugrevolvers 18 der Variante gemäß den Fig. 1 bis 4 eine Innenschleifeinheit 26 mit vertikaler Drehachse IV vorgesehen. Diese ist ebenfalls auf einem Schlitten 27 angeordnet, der längs der Schienen 14 verfahrbar ausgebildet ist. Die Bewegungsachse X₂ des Schlittens 27 ist auch hier als Bearbeitungsachse ausgebildet. Im übrigen stimmt die Funktionsweise wieder mit der zuvor beschriebenen Variante überein.

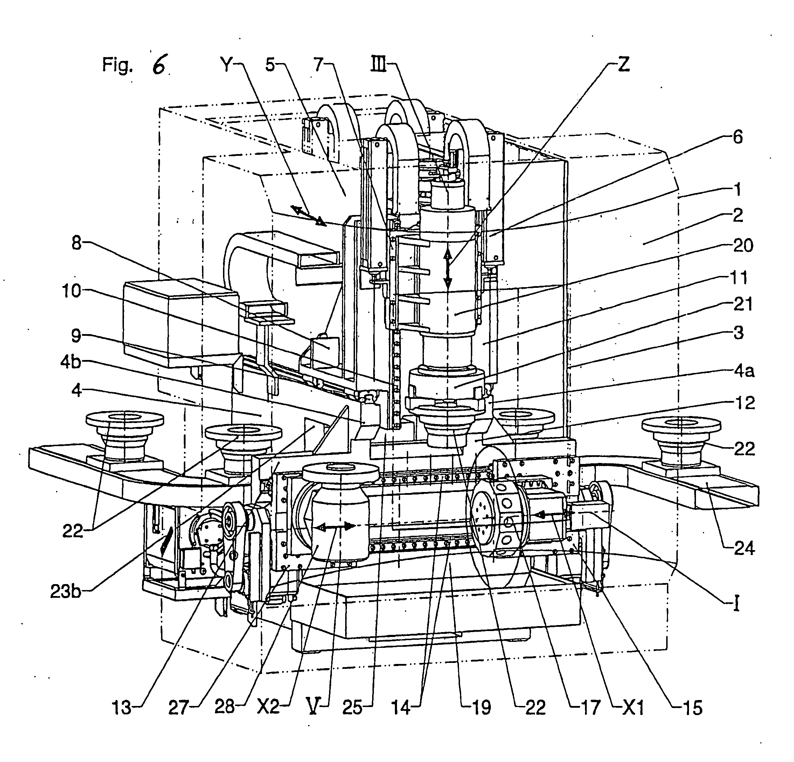

Bei der in Fig. 6 dargestellten dritten Variante ist anstelle einer Innenschleifeinheit 26 eine Außenschleifeinheit 28 ebenfalls mit vertikaler Drehachse V auf dem Schlitten 27 angeordnet. Ansonsten stimmt diese Variante mit der Variante von Fig. 5 überein, was auch für ihre Funktion gilt.

Alle Varianten zeichnen sich durch einen besonders platzsparenden Aufbau aus. Außerdem können mit diesen Werkzeugmachinen kurze Be- und Entladezeiten realisiert werden, da sich die Werkstückaufnahme- und - ablagestation 25 direkt hinter der Bearbeitungsstation 19 befindet. Durch die Anordnung der Bearbeitungsstation 19 auf der Vorderseite 2 der Einhausung 1 ist außerdem eine besonders gute Zugänglichkeit der Bearbeitungsstation 19 gegeben.

### Bezugszeichenliste

- 1: Einhausung
- 2: Vorderseite
- 3: Zugangsöffnung
- 4: Maschinengestell
- 4a: Schenkel von 4
- 4b: Schenkel von 4
- 5: Kreuzschlittenanordnung
- 6: Spindeleinheit
- 7: erster Schlitten
- 8: zweiter Schlitten
- 9: Schiene
- 10: Schiene
- 11: Vorderseite von 8
- 12: Vorderseite von 4
- 13: Trägerplatte
- 14: Schiene
- 15: Werkzeugschlitten
- 16: Werkzeugschlitten
- 17: Werkzeugrevolver
- 18: Werkzeugrevolver
- 19: Bearbeitungsstation
- 20: Werkstückspindel
- 21: Spannfutter
- 22: Werkstück
- 23a: Durchbruch
- 23b: Durchbruch
- 24: Transportband
- 25: Werkstückaufnahme- und -ablagestation
- 26: Innenschleifeinheit
- 27: Schlitten
- 28: Aussenschleifeinheit
- 29: Schlitten

- I: Drehachse von 17
- II: Drehachse von 18
- III: Drehachse von 20
- IV: Drehachse von 26
- V: Drehachse von 28
- X: Bearbeitungsachse
- X₁: Bearbeitungsachse
- X₂: Bearbeitungsachse
- Y: Bearbeitungsachse
- Z: Bearbeitungsachse

## Patentansprüche

1. Werkzeugmaschine zum Bearbeiten von als so genannte Futterteile ausgebildeten Werkstücken (22) mit einer Bearbeitungsstation (19), einer Werkstückaufnahme- und einer Ablagestation (25), einer Spindeleinheit (6) mit vertikaler Spindelachse (III) und Werkstückhalterung (21), insbesondere Spannfutter, die zum Be- und/oder Entladen der Bearbeitungsstation (19) zwischen der Bearbeitungsstation (19) und der Werkstückaufnahme- und der Ablagestation (25) längs ihrer Spindelachse (III) und senkrecht hierzu verfahrbar ausgebildet ist, und mindestens einem in der Bearbeitungsstation (19) vorhandenen Bearbeitungswerkzeug (17, 31), wobei die Bearbeitungsstation (19) an der Vorderseite (2) der Maschine (1) und die Werkstückaufnahme- und/oder die Ablagestation (25) dahinter angeordnet ist,
**dadurch gekennzeichnet,**
**dass** zwei längs je einer Bearbeitungsachse (X₁, X₂) verfahrbar ausgebildete Bearbeitungswerkzeuge (17, 18, 26, 28) vorgesehen sind, zwischen denen die Bearbeitungsstation (19) ausgebildet ist.

2. Werkzeugmaschine nach Anspruch 1,
**dadurch gekennzeichnet,**
**dass** die Spindeleinheit (6) auf einer von einem Maschinenständer (4) getragenen Kreuzschlittenanordnung (5) mit einem vertikal verfahrbaren, die Spindeleinheit (6) tragenden ersten Schlitten (7) und einem horizontal und senkrecht zur Ebene des ersten Schlittens (7) verfahrbaren und diesen tragenden zweiten Schlitten (8) angeordnet ist, der seinerseits auf dem Ständer (4) angeordnet ist, wobei der Maschinenständer (4) insbesondere als Doppelständer mit zwei zueinander parallelen, zur Vorderseite (2) der Maschine (1) senkrechten und zwischen sich einen Freiraum für die Spindeleinheit (6) und das von dieser gehaltene Werkstück (22) lassenden, vertikalen Schenkeln (4a, 4b) ausgebildet ist.

3. Werkzeugmaschine nach Anspruch 2,
**dadurch gekennzeichnet,**
**dass** der Maschinenständer (4) mit einem parallel zur Vorderseite (2) der Maschine (1) verlaufenden Durchbruch (23a, 23b), insbesondere einem Tunnel, versehen ist, durch welchen eine Transporteinrichtung (24) für die Werkstücke (22), insbesondere Transportband, hindurchführbar ist und in dessen Bereich die Werkstückaufnahme- und/oder die Ablagestation (25) vorgesehen ist, wobei die Werkstücke (22) durch den Durchbruch (23a, 23b) insbesondere hindurchtaktbar sind.

4. Werkzeugmaschine nach einem der vorhergehenden Ansprüche,
**dadurch gekennzeichnet,**
**dass** beide Bewegungsachsen (Y, Z) der Spindeleinheit (6) als Bearbeitungsachsen ausgebildet sind.

5. Werkzeugmaschine nach einem der vorhergehenden Ansprüche,
**dadurch gekennzeichnet,**
**dass** die Bearbeitungsachsen (X₁, X₂) der Bearbeitungswerkzeuge (17, 18, 26, 28) senkrecht zu beiden Bewegungsachsen (Y, Z) der Spindeleinheit (6) verlaufen.

6. Werkzeugmaschine nach einem der vorhergehenden Ansprüche,
**dadurch gekennzeichnet,**
**dass** mindestens ein Werkzeugrevolver (17), insbesondere Scheibenrevolver vorgesehen ist, wobei bevorzugt zwei Werkzeugrevolver (17, 18), insbesondere Scheibenrevolver oder ein Werkzeugrevolver (17) und eine Innenschleifeinrichtung (26) oder ein Werkzeugrevolver (17) und eine Außenschleifeinrichtung (28) vorgesehen sind.

7. Werkzeugmaschine nach Anspruch 6,
**dadurch gekennzeichnet,**
**dass** die Drehachse (I, II) eines oder beider Revolver (17, 18) parallel zur Bearbeitungsachse (X₁, X₂) verläuft.

8. Werkzeugmaschine nach einem der vorhergehenden Ansprüche,
**dadurch gekennzeichnet,**
**dass** ein Linearwerkzeughalter (30) vorgesehen ist.

## Claims

1. A machine tool for the machining of workpieces (22) made as so-called chuck parts comprising a machining station (19), a workpiece receiving station and a putting down station (25), a spindle unit (6) having a vertical spindle axis (III) and a tool holder (21), in particular a chuck, which is made movable between the machining station (19) and the workpiece receiving station and the putting down station (25) along its spindle axis (III) and perpendicular to it for the loading and/or unloading of the machining station (19), and at least one machining tool (17, 31) present in the machining station (19), wherein the machining machine (19) is arranged at the front side (2) of the machine (1) and the workpiece receiving station and/or the putting down station (25) is arranged behind it
**characterised in that**
two machining tools (17, 18, 26, 28) are provided which are made movable along a respective machining axis (X₁, X₂) and between which the machining station (19) is formed.

2. A machine tool in accordance with claim 1, **characterised in that** the spindle unit (6) is arranged on a compound slide arrangement (5) carried on a machine stand (4) with a vertically movable first slide (7) carrying the spindle unit (6) and a second slide (8) movable horizontally and perpendicular to the plane of the first slide (7) and carrying it, said second slide being in turn arranged on the stand (4), with the machine stand (4) in particular being made as a double stand with two vertical limbs (4a, 4b) parallel to one another, perpendicular to the front side (2) of the machine (1) and leaving a free space between them for the spindle unit (6) ad the workpiece (22) held by it.

3. A machine tool in accordance with claim 2, **characterised in that** the machine stand (4) is provided with an opening (23a, 23b), in particular a tunnel, which extends parallel to the front side (2) of the machine (1), and through which a transport device (24) for the workpieces (22), in particular a transport belt, can be guided and in whose region the tool receiving station and/or the putting down station (25) is provided, with the workpieces (22) in particular being able to be clocked through the opening (23a, 23b).

4. A machine tool in accordance with any one of the preceding claism, **characterised in that** both axes of movement (Y, Z) of the spindle unit (6) are made as machining axes.

5. A machine tool in accordance with claim any one of the preceding claims, **characterised in that** the machining axes (X, X₁) of the machining tools (17, 31) extend perpendicular to the two movement axes (Y, Z) of the spindle unit (6).

6. A machine tool in accordance with any one of the preceding claims, **characterised in that** at least one tool revolver (17), in particular a wheel revolver, is provided, with preferably two tool revolvers (17, 18), in particular wheel revolvers or a tool revolver (17) and an internal grinding device (26) or a tool revolver (17) and an external grinding device (28) being provided.

7. A machine tool in accordance with claim 6, **characterised in that** the axis of rotation (I, II) of one or both revolvers (17, 18) extends parallel to the machining axis (X₁, X₂).

8. A machine tool in accordance with any one of the preceding claims, **characterised in that** a linear tool holder (30) is provided.

## Revendications

1. Machine-outil pour l'usinage de pièces à oeuvrer (22) réalisées sous forme de pièces dites de doublure, comportant un poste d'usinage (19), un poste de réception et de pose de pièce (25), une unité formant broche (6) avec un axe vertical (III) et avec un porte-pièce (21), en particulier un mandrin de serrage, unité qui est réalisée mobile le long de son axe (III) et perpendiculairement à celui-ci entre le poste d'usinage (19) et le poste de réception et de pose de pièce (25), en vue de charger et/ou de décharger le poste d'usinage (19), et comportant au moins un outil d'usinage (17, 31) présent dans le poste d'usinage (19), le poste d'usinage (19) étant agencé sur la façade (2) de la machine (1) et le poste de réception et/ou de pose de pièce (25) étant agencée derrière celle-ci,
**caractérisée en ce que**
il est prévu deux outils d'usinage (17, 18, 26, 28) réalisés mobiles le long d'un axe d'usinage respectif (X₁, X₂), entre lesquels est réalisé le poste d'usinage (19).

2. Machine-outil selon la revendication 1,
**caractérisée en ce que**
l'unité formant broche (6) est agencée sur un agencement de chariots en croix (5) porté par un montant de machine (4) et pourvu d'un premier chariot (7), mobile verticalement et portant l'unité formant broche (6), et d'un second chariot (8) mobile horizontalement et perpendiculairement au plan du premier chariot (7) et portant ce dernier et agencé à son tour sur le montant (4), le montant de machine (4) étant réalisé en particulier sous la forme d'un montant double comportant deux branches verticales (4a, 4b) parallèles l'une à l'autre, perpendiculaires à la façade (2) de la machine (1) et ménageant entre elles un intervalle libre pour l'unité formant broche (6) et pour la pièce à oeuvrer (22) retenue par celle-ci.

3. Machine-outil selon la revendication 2,
**caractérisée en ce que**
le montant de machine (4) est pourvu d'une traversée (23a, 23b), en particulier d'un tunnel, s'étendant parallèlement à la façade (2) de la machine (1), à travers laquelle peut passer un dispositif de transport (24) pour les pièces à oeuvrer (22), en particulier une courroie de transport, et au niveau de laquelle est prévu le poste de réception et/ou de pose de pièce (25), les pièces à oeuvrer (22) pouvant en particulier passer de façon cadencée à travers la traversée (23a, 23b).

4. Machine-outil selon l'une des revendications précédentes,
**caractérisé en ce que**
les deux axes de mouvement (Y, Z) de l'unité formant broche (6) sont réalisés sous forme d'axes d'usinage.

5. Machine-outil selon l'une des revendications précédentes,
**caractérisée en ce que**
les axes d'usinage (X₁, X₂) des outils d'usinage (17, 18, 26, 28) s'étendent perpendiculairement aux deux axes de mouvement (Y, Z) de l'unité formant broche (6).

6. Machine-outil selon l'une des revendications précédentes,
**caractérisée en ce que**
il est prévu au moins une tourelle à outil (17), en particulier une tourelle en disque, et **en ce qu'**il est de préférence prévu deux tourelles à outil (17), en particulier deux tourelles en disque, ou bien une tourelle à outil (17) et un dispositif de meulage intérieur (26), ou encore une tourelle à outil (17) et un dispositif de meulage extérieur (28).

7. Machine-outil selon la revendication 6,
**caractérisée en ce que**
l'axe de rotation (I, II) de l'une ou des deux tourelles (17, 18) s'étend parallèlement à l'axe d'usinage (X₁, X₂).

8. Machine-outil selon l'une des revendications précédentes,
**caractérisée en ce que**
il est prévu un porte-outil linéaire (30).
